# EUROPÄISCHE PATENTSCHRIFT

(11) **EP 2 473 327 B1**
(45) Veröffentlichungstag und Bekanntmachung des Hinweises auf die Patenterteilung: **12.10.2016**
(21) Anmeldenummer: 10784947.3
(22) Anmeldetag: 31.08.2010
(51) Int. Cl.: B24B 57/02, B28D 5/00

(54) **VERFAHREN ZUR WIEDERAUFBEREITUNG VON VERBRAUCHTEN BEARBEITUNGSSLURRIES**
METHOD FOR RECOVERING EXHAUSTED MACHINING SLURRIES
PROCÉDÉ DE RETRAITEMENT DE BOUES D'USINAGE USAGÉES

(30) Priorität: 02.09.2009 DE 102009039728; 02.09.2009 DE 102009039727
(43) Veröffentlichungstag der Anmeldung: 11.07.2012
(73) Patentinhaber: Krettek, Guntram, 41749 Viersen (DE)
(72) Erfinder: Krettek, Guntram, 41749 Viersen (DE)
(74) Vertreter: Hauck Patentanwaltspartnerschaft mbB
(86) Internationale Anmeldenummer: PCT/DE2010/001032
(87) Internationale Veröffentlichungsnummer: WO 2011/026473

(56) Entgegenhaltungen:
- EP-A1- 1 749 797
- WO-A1-2008/013327
- DE-A1- 19 925 082
- JP-A- 1 316 170
- JP-A- 7 000 862
- JP-A- 11 156 719
- US-A- 1 542 747

## Beschreibung

Die vorliegende Erfindung betrifft ein Verfahren zur Wiederaufbereitung von verbrauchten Bearbjeitungsslurries enthaltend ein Bearbeitungsmedium, ein Trägerfluid für das Bearbeitungsmedium, Bearbeitungsgutmaterial, Bearbeitungswerkzeugpartikel und ggf. Additive.

Bei vielen Bearbeitungsvorgängen wird ein Bearbeitungsfluid eingesetzt, das ein Bearbeitungsmedium, beispielsweise ein Abrasivmedium, und ein Trägerfluid für das Bearbeitungsmedium enthält. Des Weiteren können hierin bestimmte Additive enthalten sein. Nach erfolgter Bearbeitung (mechanischer Bearbeitung), beispielsweise einem Sägen, Schleifen, Läppen, fällt ein sogenannter Bearbeitungsslurry an, der das Bearbeitungsmedium, das Trägerfluid für das Bearbeitungsmedium, Bearbeitungsgutmaterial, Bearbeitungswerkzeugpartikel und ggf. Additive enthält. Bei diesem Slurry handelt es sich um ein Material mit schlammförmiger oder pastenförmiger Konsistenz, das wieder aufbereitet werden soll, da es eine Reihe von Wertstoffen enthält.

Ein Beispiel einer Bearbeitung, bei der derartige Bearbeitungsslurries anfallen, ist das Sägen von Siliciumingots. Chip- und solartaugliches Silicium wird im sogenannten Einkristall-Schmelzverfahren aus bis zu 2 m langen Stangen mit bis zu 300 mm Durchmesser, den sogenannten Ingots, gefertigt. Diese Ingots werden in hauchdünne Scheiben (Wafer) mit einer Dicke bis zu 130-650 µm mittels sogenannten Drahtsägen gesägt, d. h. ein Eisendraht wird als Säge durch den Siliciumblock geführt. Damit dieser Draht überhaupt schneiden kann, wird er fortlaufend mit einer sogenannten Sägesuspension beschichtet. Die Suspension besteht aus einem Trägerfluid als Viskositätsgeber, beispielsweise Polyethylenglycol PEG, und einem Bearheitungsmedium, bei dem es sich um ein Abrasivmedium handelt, beispielsweise Siliciumcarbid SiC, in einer für den jeweiligen Schneidvorgang bzw. Sägevorgang geeigneten Körnung. Diese Suspension wird meist im Mischungsverhältnis 50:50 angesetzt. Beim Sägevorgang fällt als "Verschnitt" reines Silicium (Bearbeitungsgutmaterial) an, pro Schnitt ca. 300 µm des Ingots, welches sich in der Sägesuspension anreichert. Die Suspension kann zum mehrmaligen Sägen verwendet werden, aber durch die immer größer werdenden Siliciumkonzentrationen ist nach wenigen Durchläufen die Suspension verbraucht.

Als Aufbereitungsverfahren gibt es ein System, das mit Hydrozyklonen und vielen wässrigen Verdünnungsstufen arbeitet und am Ende zu einer Trennung von Polyethylenglycol und Feststoff, in diesem Fall SiC und SiO₂, führt. Eine weitergehende Auftrennung von SiC und SiO₂ ist mit diesem Verfahren nicht möglich, auch arbeitet es nur bis zu einer Teilchengröße von max. 5 µm. Da in wässriger Verdünnung gearbeitet wird, muss der Wasseranteil im Polyethylenglycol aufwändig und teuer entfernt werden. Eine Rückgewinnung des Chip- oder Solarsiliciums ist mit dieser Methode nicht möglich, da sich durch die wässrige Verdünnung das elementare Silicium oxidativ zu SiO₂ und dessen Hydratformen umsetzt.

Aus der DE 10 2007 048 879 A1 sind ein Verfahren zur Wiederaufbereitung von fluiden Sägeslurries sowie deren Verwendung zur Herstellung von Wafern mit verbesserten Oberflächen bekannt. Es geht hierbei speziell um das Wiederaufbereiten von verbrauchten fluiden Trennmedien, die ein Fluid, Sägepartikel, abgespante Schliffteilchen aus Sägegutmaterial sowie ggf. Hilfsstoffe enthalten, wobei das. Fluid von den Sägepartikeln abgetrennt wird. Dies erfolgt mittels einer Filtration über einen Kernspurfilter. Das so erhaltene fluide Permeat wird weiterverwendet, wobei es noch feinste Schliffteilchen aus Sägegutmaterial enthält. Bei diesem bekannten Verfahren wird somit zur Wiederaufbereitung ein Filtrationsverfahren eingesetzt.

In der US 6 231 628 B1 ist ein Verfahren zum Behandeln eines verbrauchten Bearbeitungsslurries beschrieben, der aus dem Sägen von Siliciumwafern aus einem Siliciumingot resultiert. Bei diesem Verfahren wird der verbrauchte Slurry erhitzt, um die Viskosität zu verringern, und danach in eine flüssige Fraktion enthaltend Sägestaub und eine feste Fraktion getrennt. Der Trennvorgang wird dabei mittels Filtration durchgeführt. Die Weiterverarbeitung der festen Fraktion erfolgt durch Verdünnung mit Wasser und den Einsatz von Hydrozyklonen.

Ferner ist ein Verfahren zur Wiederaufbereitung von verbrauchten Bearbeitungsslurries aus der EP 1 749 797 A1 bekannt. Bei diesem bekannten Verfahren findet in einem ersten Schritt durch Zentrifugieren die Abtrennung einer festen Fraktion, die vorwiegend ein Bearbeitungsmedium enthält, von einer den Rest bildenden flüssigen Fraktion statt. Es wird hierbei mit Schleuderfaktoren von 100 bis 1.000 g gearbeitet.

Eine Spezialzentrifuge, mit der sich sehr hohe Schleuderfaktoren über 10.000 g erreichen lassen, ist aus der DE 199 25 082 A1 bekannt. In dieser Veröffentlichung ist jedoch nicht der Einsatz einer derartigen Zentrifuge für den Anwendungsfall einer Fest-Flüssig-Trennung zur Wiederaufbereitung von verbrauchten Verarbeitungsslurries beschrieben.

Der vorliegenden Erfindung liegt die Aufgabe zugrunde, ein Verfahren der eingangs wiedergegebenen Art zu schaffen, mit dem eine besonders effektive und sortenreine Wiederaufbereitung bei geringem Aufwand, insbesondere ohne nachteilige und zeitaufwändige Verdünnungsschritte, erreicht werden kann.

Diese Aufgabe wird erfindungsgemäß bei einem Verfahren der angegebenen Art durch die Merkmale von Patentanspruch 1 gelöst.

Das erfindungsgemäße Verfahren gemäß dieser Ausführungsform nutzt einen völlig anderen Ansatz als beim Stand der Technik. Der Bearbeitungsslurry wird hierbei nicht mit Wasser verdünnt, so dass die Wertstoffe im Slurry nicht kontaminiert werden. Vielmehr findet eine sortenreine Trennung der Wertstoffe im Zentrifugenkraftfeld statt.

Bei dem erfindungsgemäßen Verfahren werden die Wertstoffe durch Zentrifugieren voneinander getrennt, wobei insbesondere extrem hochtourige Zentrifugen zum Einsatz gelangen, mit denen eine sortenreine Trennung der Wertstoffe im Zentrifugalkraftfeld gelingt. Mit Hilfe von derartigen Zentrifugen wird erfindungsgemäß eine effektive Fest-Flüssig-Trennung durchgeführt, d. h. das Trägerfluid wird von den restlichen Feststoffen (Bearbeitungsmedium, Bearbeitungsgutmaterial, Bearbeitungswerkzeugpartikel und ggf. Additive) abgetrennt.

Das abgetrennte Trägerfluid kann verschiedenen Verwendungszwecken zugeführt werden. Es kann insbesondere wieder zur Herstellung von Bearbeitungsslurries eingesetzt werden. Vorzugsweise findet eine Reinigung des abgetrennten Trägerfluides statt, insbesondere ein Waschvorgang mit einem Lösungsmittel, wie beispielsweise Hexan.

Die beim Zentrifugieren als Feststoffkuchen gewonnenen restlichen Feststoffe werden durch weitere Trennverfahren voneinander getrennt, um eine vollständige Wiederaufbereitung des Slurries zu erreichen. Hierbei können verschiedenartige Trennverfahren zur Anwendung gelangen. Beispielsweise werden die Bearbeitungswerkzeugpartikel durch ein magnetisches Trennverfahren abgetrennt, wenn die Bearbeitungswerkzeugpartikel aus einem magnetischen Material, wie Eisen, bestehen. Bei der Wiederaufbereitung der restlichen Feststoffe können beispielsweise weitere Zentrifugierverfahren, Filtrationsverfahren etc. Verwendung finden.

Nach Abtrennung der Bearbeitungswerkzeugpartikel können beispielsweise das Bearbeitungsmedium und das Bearbeitungsmaterial durch ein weiteres Zentrifugierverfahren voneinander getrennt werden, wobei hier von der Tatsache Gebrauch gemacht wird, dass die Korngrößenverteilungen beider Materialien in einer bimodalen Form vorliegen. Diese kann mit einem scharfen Schnitt durch Zentrifugieren (Klassieren) aufgetrennt werden. Hiermit kann im Zentrifugalkraftfeld ohne Zugabe von weiteren Hilfsflüssigkeiten (keine Kontamination) eine weitestgehende Aufteilung von Verarbeitungsmedium und Bearbeitungsgutmaterial erreicht werden.

Die resultierenden Wertstoffströme können speziellen Verwendungen zugeführt werden. Sie können aber auch in einem Slurrymanagementsystem wieder zu Bearbeitungssuspensionen vereint und somit wieder an den Anfang des Bearbeitungsprozesses, also der Wertschöpfungskette, zurückgeführt werden. Das abgetrennte Bearbeitungsgutmaterial kann durch Wasch- und/oder Filtrationprozesse wieder als reiner Werkstoff gewonnen werden. Das Ziel ist ein geschlossener Wertstoffkreislauf.

Der hier verwendete Begriff "Bearbeitungsslurry" soll Schlämme, Schlicker, Pasten etc. abdecken, d. h. Materialien mit allen Viskositätsbereichen zwischen flüssig und fest.

Wie bereits erwähnt, wird vorzugsweise mit hochtourigen Zentrifugen gearbeitet. Erfindungsgemäß wird beim Zentrifugieren (1. Schritt) mit einem Schleuderfaktor > 3000 g, insbesondere in einem Bereich von 10.000 - 20.000 g operiert. In diesem Operationsfeld lässt sich das Trägerfluid exakt (mit einem hohen Reinheitsgrad) von den restlichen Feststoffen des verbrauchten Bearbeitungsslurries abtrennen.

Was den Temperaturbereich beim Zentrifugieren anbetrifft, so wird vorzugsweise in einem Temperaturbereich < 80°C, insbesondere in einem Bereich von 50°C - 80°C, zentrifugiert. Dieser Temperaturbereich ist optimal, um nicht mit zu hohen Schleuderfaktoren arbeiten zu müssen. Andererseits erfordert das erfindungsgemäße Verfahren dieser Ausführungsform jedoch nicht zwingend einen Schritt zur Viskositätsreduzierung.

Die vorstehend angegebenen hohen Schleuderfaktoren lassen sich nur mit Spezialzentrifugen realisieren, die die entsprechenden Lagerkräfte beherrschen. So wird vorzugsweise mit Zentrifugen mit großer Klassierfläche und geringem Innendurchmesser gearbeitet, insbesondere mit Zentrifugen mit einem relativ hohen Schlankheitsverhältnis. Speziell finden Zentrifugen mit einem Schankheitsverhältnis L/D > 1,2, wobei L die Länge oder Höhe der in der Zentrifugentrommel zur Verfügung stehenden Klassierfläche und D der Innendurchmesser der Zentrifugentrommel ist, Verwendung.

Eine derartige Zentrifuge ist beispielsweise in der DE 199 25 082 B4 beschrieben. Vorzugsweise wird mit einer solchen Zentrifuge gearbeitet.

Was die Rückgewinnung des in der Zentrifuge gebildeten Feststoffkuchens anbetrifft, so kann dieser mechanisch entfernt werden, beispielsweise über Ausschälschritte mit geeigneten Schaber/Messervorrichtungen. Die beim Zentrifugieren abgetrennten restlichen Feststoffe (Feststoffkuchen) können jedoch auch mit Hilfe eines Redispergierfluides redispergiert und dann zur Weiterverwendung wieder vom Redispergierfluid getrennt werden. Kombinationen beider Verfahren können ebenfalls Anwendung finden. Beim Redispergieren kann der Feststoffkuchen beispielsweise durch einen Hochdruckstrahl aufgelöst und separiert werden.

Durch die Verwendung der beschriebenen Zentrifugen mit hohem Schlankheitsverhältnis lassen sich, wie erwähnt, hohe Schleuderfaktoren verwirklichen, ohne dass nicht mehr beherrschbare Lagerkräfte entstehen. Ferner wird hierdurch eine Spritzkornminimierung und ein Auffangen der Feinpartikel erreicht, da die Distanz zwischen Aufgabe und Entnahme bei diesen Zentrifugen besonders groß ist.

Das erfindungsgemäße Verfahren
findet vorzugsweise zur Wiederaufbereitung von verbrauchten Sägeslurries beim Sägen von Ingots, insbesondere Silicium-Ingots, Verwendung. Bei derartigen Sägeslurries findet als Trägerfluid insbesondere ein Glycol, speziell Polyethylenglycol, Verwendung. Als Bearbeitungsmedium wird hierbei speziell Siliciumcarbid eingesetzt, das als abrasives Material dient.

Dies schließt nicht aus, dass das erfindungsgemäße Verfahren auch zur Wiederaufbereitung von Bearbeitungsslurries eingesetzt werden kann, die aus anderen Bearbeitungsvorgängen, wie Schleifen, Läppen etc., resultieren.

Die Erfindung wird nachfolgend anhand eines Ausführungsbeispiels in Verbindung mit der Zeichnung im Einzelnen erläutert. Es zeigen:
- Figur 1: eine schematische Darstellung eines Zentrifugierschrittes zur Abtrennung des Trägerfluides von den Feststoffen einer Sägesuspension gemäß einer Ausführungsform des erfindungsgemäßen Verfahrens;
- Figur 2: einen Teilvertikalschnitt durch eine Zentrifuge mit hängend angeordneter Schleudertrommel, die für diese Ausführungsform des erfindungsgemäßen Verfahrens Anwendung findet; und
- Figur 3: eine Teilvertikalschnitt durch eine stehende Zentrifuge, die für diese Ausführungsform des erfindungsgemäßen Verfahrens Anwendung findet.

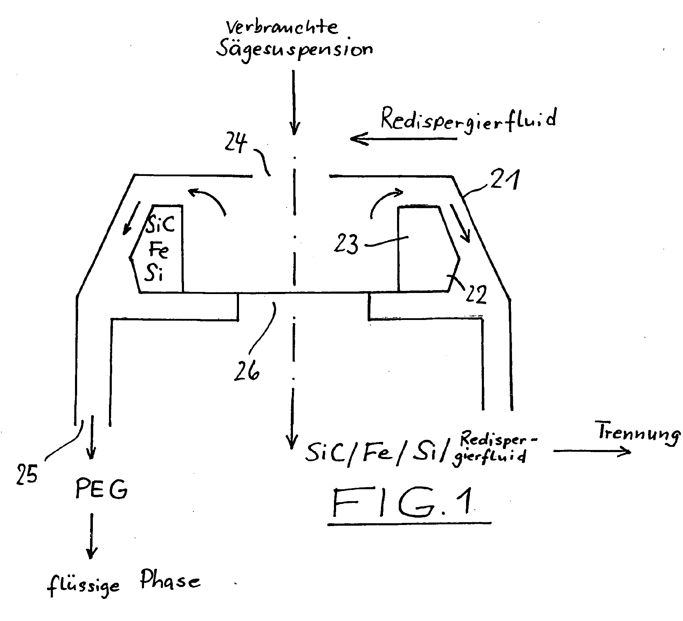

Figur 1 zeigt schematisch eine Zentrifuge 21 mit einem äußeren Gehäuse und einer inneren Zentrifugentrommel 22 zur Durchführung des erfindungsgemäßen Verfahrens. Durch Rotation der Zentrifugentrommel 22 erfolgt eine Trennung in eine flüssige Phase und eine feste Phase, wobei sich die feste Phase in der Form eines Feststoffkuchens 23 an der radialen Innenwand der Trommel 22 absetzt. Im vorliegenden Fall wird verbrauchte Sägesuspension, die sich aus einem Bearbeitungsmedium, hier Siliciumcarbid, einem Trägerfluid für das Bearbeitungsmedium, hier Polyethylenglycol (PEG), Bearbeitungsgutmaterial, hier Silicium, und Bearbeitungswerkzeugpartikeln, hier Eisen, zusammensetzt, über einen Einlass 24 in die Zentrifugentrommel 22 eingeführt. Durch Rotation der Zentrifugentrommel 22 erfolgt eine Trennung in die Feststoffe SiC, Fe und Si, die sich als Feststoffkuchen 23 absetzen, und das Trägerfluid PEG, das über einen Überlauf und einen Ablauf 25 als flüssige Phase aus der Trommel herausgeführt wird. Der Feststoffkuchen 23 wird in einer Redispergierphase, in der die Trommel 22 mit geringer Drehzahl rotiert, von der Innenwand der Trommel 22 abgeführt. Hierzu wird ein Redispergierfluid beispielsweise mit hohem Druck als Strahl auf den Feststoffkuchen 23 aufgebracht, so dass sich dieser von der Innenwand der Trommel löst und über den Auslass 26 abgeführt wird. Die dabei gebildete Dispersion, die aus SiC/Fe/Si und dem Redispergierfluid besteht, wird wieder aufbereitet, indem das Redispergierfluid abgetrennt wird. Danach können die Eisenpartikel beispielsweise über einen magnetischen Trennvorgang abgetrennt werden. Das verbleibende SiC/Si-Gemisch kann beispielsweise über einen Klassiervorgang in einer weiteren Zentrifuge mit einem scharfen Schnitt aufgetrennt werden, da diese Substanzen in bimodaler Form vorliegende Korngrößenverteilungen besitzen.

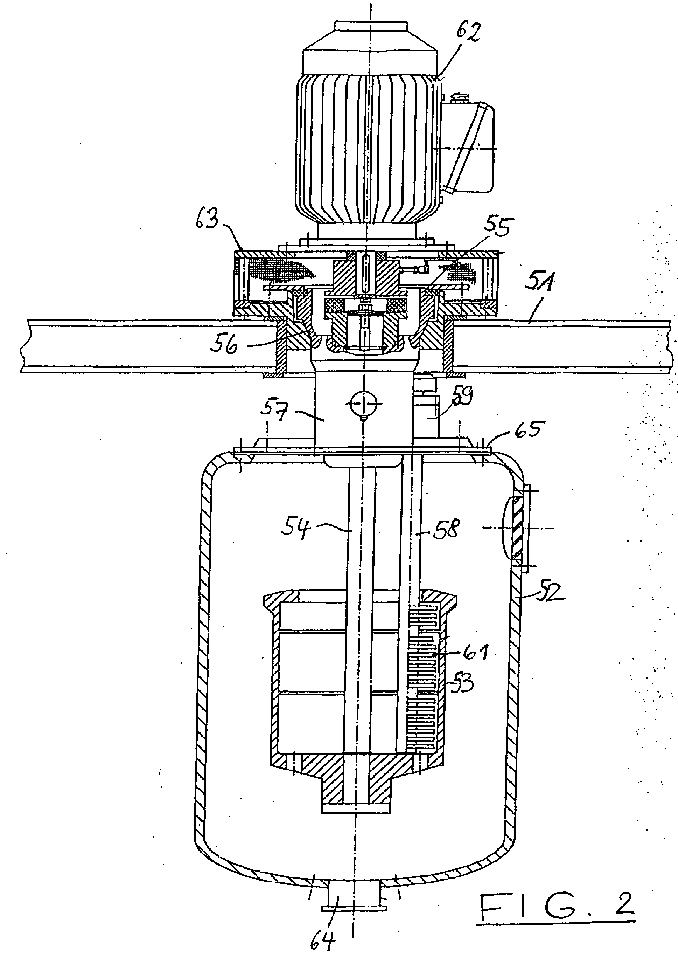

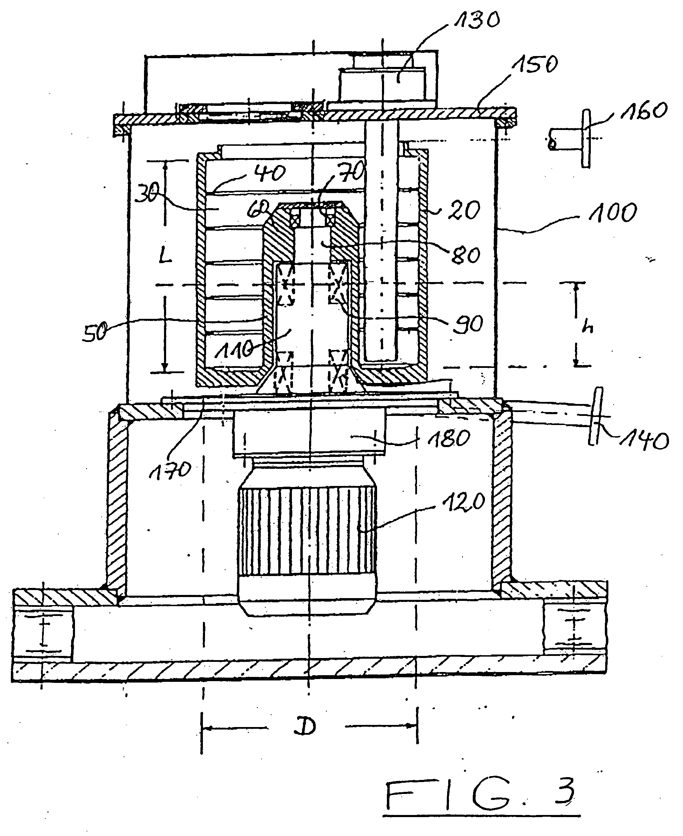

Die Figuren 2 und 3 zeigen zwei Beispiele von Zentrifugen, die für das vorstehend beschriebene Trennverfahren der zweiten Ausführungsform Verwendung finden können.

Figur 2 zeigt eine Ausführungsform einer Zentrifuge mit hängend angeordneter Schleudertrommel im Teilvertikalschnitt. Die Zentrifuge weist ein Außengehäuse 51 auf, das einen relativ großen Raum umgibt, in dem ein eine Zentrifugentrommel 53 umgebendes Innengehäuse 52 angeordnet ist. Das Innengehäuse 52 ist mit einem Deckel 65 versehen, der am Lagergehäuse 55, und zwar an einer Lagerbuchse 57 des Lagergehäuses, befestigt ist. Das Wellenlager 55 ist in einer Öffnung des Außengehäuses 51 in abgedichteter Weise montiert und hat einen kugelkalottenförmigen Abschnitt 56, mit dem das Lager schwenkbar bzw. flexibel in einer entsprechenden sphärisch ausgebildeten Lagerpfanne eines fest am Außengehäuse 51 angebrachten Teiles des Wellenlagers 55 gelagert ist. Die Lagerbuchse 57 kann somit Schwenkbewegungen relativ zum Außengehäuse 51 ausführen, wobei sich das Innengehäuse 52 mitbewegt.

Ein geeigneter Wellenantrieb 62 in der Form eines Elektromotors ist außerhalb des Außengehäuses 51 angeordnet. Eine Abdeckung 63 dient zur Abdeckung des Wellenlagers 55. Im Inneren der Lagerbuchse 57 sind ein oder mehrere Wälzlager (nicht gezeigt) angeordnet, die die Welle 54 drehbar innerhalb der Lagerbuchse 57 lagern. Die Welle 54 kann somit eine Drehbewegung und eine Schwenk- bzw. Pendelbewegung ausführen.

Eine Entfernungseinrichtung 59 zur Entfernung des Feststoffkuchens ist am Deckel 65 des Innengehäuses 52 bzw. an der Lagerbuchse 57 befestigt. Die Entfernungseinrichtung 59 weist einen sich durch den Deckel des Innengehäuses 52 erstreckenden Arm 58 auf, der entsprechende Messer 61 zur Entfernung des Feststoffkuchens trägt. Am unteren Ende des Innengehäuses ist ein Auslass 64 angeordnet.

Bei dieser Ausführungsform ist durch die Montage des Innengehäuses 52 am Wellenlager 55 und der Entfernungseinrichtung 59 am Deckel 65 des Innengehäuses 52 bzw. an der Lagerbuchse 57 sichergestellt, dass Innengehäuse und Entfernungseinrichtung 59 die Schwenk- bzw. Pendelbewegungen der Welle 54 mitmachen, so dass zwischen dem Arm 58 und der Welle 54 bzw. der Trommelwand immer Parallelität herrscht.

Die in Figur 3 dargestellte "stehende" Zentrifuge arbeitet als Nassklassiereinrichtung und besitzt ein stationäres Gehäuse 100 mit einem darauf angeordneten Deckel 150. Das stationäre Gehäuse 100 ist über geeignete Vibrationsdämpfungseinrichtungen auf einem Lagergestell gelagert. Innerhalb des stationären Gehäuses 100 ist eine Schleudertrommel 20 mit vertikaler Achse angeordnet, die von einer vertikalen Welle 80 in Rotation versetzt wird. Die vertikale Welle 80 erstreckt sich von unten in die Schleudertrommel 20 hinein. Sie wird von einem Lagergehäuse 110 umgeben, das ein oberes Hauptlager 90 und ein unteres zweites Lager zum Lagern der Welle 80 enthält. Das Lagergehäuse 110 ist an einer Platte 170 befestigt, welche wiederum am stationären Gehäuse 100 befestigt ist. Die Welle 80 erstreckt sich durch das Lagergehäuse 110 und die Platte 170 nach unten über eine geeignete Kupplungseinrichtung 180 bis zu einem einen Direktantrieb bildenden Elektromotor 120. Die Drehzahl der Welle 80 ist regelbar.

Die Schleudertrommel 20 weist eine geeignete Zuführung 130 für die zu klassierende Sägesuspension auf, die sich in der Form eines Rohres durch die oben offene Schleudertrommel in diese hinein bis zu deren unterem Endbereich erstreckt und dort eine Austrittsöffnung aufweist. Die klassierte Sägesuspension (Polyethylenglycol) wird über ein Abzugsrohr 160 vom oberen Ende der Schleudertrommel 20 abgezogen. Ein Abzugsrohr 140 am unteren Ende der Schleudertrommel dient zum Abziehen des Sedimentes (SiC, Si, Fe).

Wie man der Figur entnehmen kann, ist die Schleudertrommel somit in ihrem unteren Bereich kreisringförmig und in ihrem oberen Bereich kreisförmig ausgebildet. Horizontale Trennwände 40 unterteilen das Innere der Schleuderkammer in sechs übereinander angeordnete Klassierkammern 30, in deren radialen Endbereichen das Sediment abgelagert wird. Dieses wird von dort über eine geeignete Entfernungseinrichtung (nicht gezeigt) entfernt.

Wie vorstehend erwähnt, besteht die Zielsetzung darin, die Schleudertrommel 20 möglichst schlank auszubilden und dabei das Hauptlager 90 der Welle möglichst mittig, d. h. im Bereich des Schwerpunktes der Schleudertrommel anzuordnen. Dies ist bei der vorliegenden Ausführungsform realisiert. Man erkennt, dass hierbei das Hauptlager 90 so tief in der Schleudertrommel angeordnet ist, dass die vertikale Mitte des Hauptlagers 90 der Welle 80 auf einer Höhe h, gemessen vom Inneren unteren Ende der Schleudertrommel aus, angeordnet ist, die etwa 40 Prozent der Länge oder Höhe L der in der Schleudertrommel 2 zur Verfügung stehenden Klassierfläche beträgt. Ferner besitzt das Schlankheitsverhältnis L/D der Schleudertrommel, d. h. das Verhältnis zwischen der Länge oder Höhe der in der Schleudertrommel zur Verfügung stehenden Klassierfläche und dem Innendurchmesser der Schleudertrommel, einen Wert von etwa 1,24. Es versteht sich, dass die vorstehend wiedergegebenen Werte rein beispielhaft sind. Bei dieser Ausführungsform ergeben sich in der Schleudertrommel 20 sechs übereinander angeordnete Klassierkammern 30.

Wie erwähnt, sind im Lagergehäuse 110 ein oberes Hauptlager 90 und ein unteres zweites Lager für die Welle 80 angeordnet. Hierdurch ergibt sich eine stabile Lagerung. Die Welle 80 erstreckt sich oben aus dem Lagergehäuse 110 heraus und endet in einem Abschnitt mit reduziertem Durchmesser. An diesem Abschnitt ist die zentrale Nabe 60 der Schleudertrommel fixiert, die in axialer Verlängerung der zylindrischen Innenwand 50 der Schleudertrommel ausgebildet ist. Die Fixierung ist dabei über Reibkontakt (bei 70) realisiert. Am oberen Ende ist die Nabe 60 über einen Deckel geschlossen.

Die Zentrifuge zeichnet sich dadurch aus, dass sich durch das hohe Schlankheitsverhältnis eine große Distanz zwischen Aufnahme und Entnahme und somit eine Reduzierung der Gefahr von Kurzschlussströmungen ergibt, die letztendlich zu einer besseren Trennung führt. Ferner werden ein hoher Schleuderfaktor (es kann mit großen Drehzahlen gefahren werden) und eine große Klassierfläche durch eine Vielzahl von übereinander angeordneten Kammern erreicht.

## Patentansprüche

1. Verfahren zur Wiederaufbereitung von verbrauchten Bearbeitungsslurries enthaltend ein Bearbeitungsmedium, ein Trägerfluid für das Bearbeitungsmedium, Bearbeitungsgutmaterial, Bearbeitungswerkzeugpartikel und ggf. Additive, bei dem der unverdünnte verbrauchte Bearbeitungsslurry einer Fest-Flüssig-Trennung durch Zentrifugieren unterzogen wird, wobei in einem ersten Schritt das Trägerfluid durch Zentrifugieren mit einem Schleuderfaktor > 3.000 g von den restlichen Feststoffen, nämlich Bearbeitungsmedium, Bearbeitungsgutmaterial, Bearbeitungswerkzeugpartikel und ggf. Additiven, abgetrennt wird und in einem zweiten Schritt die restlichen Feststoffe durch weitere Trennverfahren voneinander getrennt werden.

2. Verfahren nach Anspruch 1, **dadurch gekennzeichnet, dass** bei den weiteren Trennverfahren die Bearbeitungswerkzeugpartikel durch ein magnetisches Trennverfahren abgetrennt werden.

3. Verfahren nach Anspruch 1 oder 2, **dadurch gekennzeichnet, dass** das abgetrennte Trägerfluid gereinigt wird.

4. Verfahren nach einem der vorangehenden Ansprüche, **dadurch gekennzeichnet, dass** das abgetrennte Bearbeitungsgutmaterial durch Wasch- und/oder Filtrationsprozesse wieder als reiner Werkstoff gewonnen wird.

5. Verfahren nach einem der vorangehenden Ansprüche, **dadurch gekennzeichnet, dass** beim Zentrifugieren mit einem Schleuderfaktor in einem Bereich von 10.000-20.000 g gearbeitet wird.

6. Verfahren nach einem der vorangehenden Ansprüche, **dadurch gekennzeichnet, dass** in einem Temperaturbereich < 80°C, insbesondere in einem Bereich von 50°C-80°C, zentrifugiert wird.

7. Verfahren nach einem der vorangehenden Ansprüche, **dadurch gekennzeichnet, dass** mit einer Zentrifuge mit großer Klassierfläche und geringem Innendurchmesser gearbeitet wird, insbesondere mit einer Zentrifuge mit einem Schlankheitsverhältnis L/D > 1,2, wobei L die Länge oder Höhe der in der Zentrifugentrommel zur Verfügung stehenden Klassierfläche und D der Innendurchmesser der Zentrifugentrommel ist.

8. Verfahren nach Anspruch 7, **dadurch gekennzeichnet, dass** mit einer Zentrifuge gemäß DE 199 25 082 B4 gearbeitet wird.

9. Verfahren nach einem der vorangehenden Ansprüche, **dadurch gekennzeichnet, dass** die beim Zentrifugieren abgetrennten restlichen Feststoffe mit Hilfe eines Redispergierfluides redispergiert und dann zur Weiterverwendung wieder vom Redispergierfluid getrennt werden.

10. Verfahren nach einem der vorangehenden Ansprüche, **dadurch gekennzeichnet, dass** es zur Wiederaufbereitung von verbrauchten Sägeslurries beim Sägen von Ingots, insbesondere Silicium-Ingots, eingesetzt wird.

11. Verfahren nach einem der vorangehenden Ansprüche, **dadurch gekennzeichnet, dass** es zur Wiederaufbereitung von verbrauchten Bearbeitungsslurries verwendet wird, die ein Glycol insbesondere Polyethylenglycol, als Trägerfluid enthalten.

12. Verfahren nach einem der vorangehenden Ansprüche, **dadurch gekennzeichnet, dass** es zur Wiederaufbereitung von verbrauchten Bearbeitungsslurries verwendet wird, die Abrasivstoffe, wie Silciumcarbid oder Industriediamant, als Bearbeitungsmedium enthalten.

## Claims

1. A method for recovering exhausted machining slurries containing a machining medium, a carrier fluid for the machining medium, material stemming from the machined product, particles stemming from the machining tool and optionally additives, by carrying out a solid-liquid-separation by centrifuging with the undiluted exhausted machining slurry wherein in a first step the carrier fluid is separated from the remaining solids, namely the machining medium, the material stemming from the machined product, the particles stemming from the machining tool and optionally additives, by centrifuging with a centrifugal factor > 3.000 g, and in a second step the remaining solids are separated from one another by further separation processes.

2. The method according to claim 1, **characterized in that** the particles stemming from the machining tool are separated by a magnetic separation process during the further separation processes.

3. The method according to claim 1 or 2, **characterized in that** the separated carrier fluid is cleaned.

4. The method according to one of the preceding claims, **characterized in that** the separated material stemming from the machined product is recovered as pure material by washing and/or filtration processes.

5. The method according to one of the preceding claims, **characterized in that**, when centrifuging, it is worked with a centrifugal factor in a range of 10.000 - 20.000 g.

6. The method according to one of the preceding claims, **characterized in that** it is centrifuged in a temperature range < 80°C, especially in a range of 50°C-80°C.

7. The method according to one of the preceding claims, **characterized in that** it is worked with a centrifuge with large classifying surface and small inner diameter, especially with a centrifuge with a slimness ratio L/D > 1,2, wherein L is the length or height of the classifying surface present in the centrifuging drum and D is the inner diameter of the centrifuging drum.

8. The method according to claim 7, **characterized in that** it is worked with a centrifuge according to DE 199 25 082 B4.

9. The method according to one of one of the preceding claims, **characterized in that** the remaining solids separated when centrifuging are redispersed by means of a redispersing fluid and are then separated again from the redispersing fluid for further use.

10. The method according to one of the preceding claims, **characterized in that** it is used for recovering exhausted sawing slurries when sawing ingots, especially silicon ingots.

11. The method according to one of the preceding claims, **characterized in that** it is used for recovering exhausted machining slurries which contain a glycol, especially polyethylene glycol, as carrier fluid.

12. The method according to one of the preceding claims, **characterized in that** it is used for recovering exhausted machining slurries which contain abrasive substances, as silicon carbide or industrial diamonds, as machining medium.

## Revendications

1. Procédé de retraitement de boues d'usinage usagées contenant un agent d'usinage, un fluide porteur pour l'agent d'usinage, de la matière d'usinage, des particules d'outil d'usinage et éventuellement des additifs, selon lequel les boues d'usinage usagées non diluées sont soumises à une séparation entre solide et liquide par centrifugation, le fluide porteur étant séparé dans une première étape, par centrifugation avec un facteur de centrifugation de > 3 000 g, des matières solides résiduelles, à savoir agent d'usinage, matière d'usinage, particules d'outil d'usinage et éventuellement additifs, et les matières solides résiduelles étant séparées les unes des autres dans une deuxième étape par d'autres procédés de séparation.

2. Procédé selon la revendication 1, **caractérisé en ce que**, pour ce qui est des autres procédés de séparation, les particules d'outil d'usinage sont séparées par un procédé de séparation magnétique.

3. Procédé selon la revendication 1 ou 2, **caractérisé en ce que** le fluide porteur séparé est purifié.

4. Procédé selon l'une des revendications précédentes, **caractérisé en ce que** la matière d'usinage séparée est récupérée comme matière propre par des processus de lavage et/ou de filtrage.

5. Procédé selon l'une des revendications précédentes, **caractérisé en ce que**, lors de la centrifugation, on travaille avec un facteur de centrifugation compris dans une plage allant de 10 000 à 20 000 g.

6. Procédé selon l'une des revendications précédentes, **caractérisé en ce que** l'on centrifuge dans une plage de température < 80 °C, notamment dans une plage allant de 50 °C à 80 °C.

7. Procédé selon l'une des revendications précédentes, **caractérisé en ce que** l'on travaille avec une centrifugeuse avec une grande surface de criblage et un petit diamètre intérieur, notamment avec une centrifugeuse avec un degré d'allongement L/D > 1,2, L étant la longueur ou la hauteur de la surface de criblage disponible dans le tambour de centrifugeuse et D étant le diamètre intérieur du tambour de centrifugeuse.

8. Procédé selon la revendication 7, **caractérisé en ce que** l'on travaille avec une centrifugeuse selon DE 199 25 082 B4.

9. Procédé selon l'une des revendications précédentes, **caractérisé en ce que** les matières solides résiduelles séparées lors de la centrifugation sont redispersées à l'aide d'un fluide de redispersion et sont ensuite à nouveau séparées du fluide de redispersion pour une utilisation ultérieure.

10. Procédé selon l'une des revendications précédentes, **caractérisé en ce qu'**il est utilisé pour le retraitement de boues de sciage usagées lors du sciage de lingots, notamment de lingots de silicium.

11. Procédé selon l'une des revendications précédentes, **caractérisé en ce qu'**il est utilisé pour le retraitement de boues d'usinage usagées qui contiennent un glycol, notamment du polyéthylène glycol, comme fluide porteur.

12. Procédé selon l'une des revendications précédentes, **caractérisé en ce qu'**il est utilisé pour le retraitement de boues d'usinage usagées qui contiennent des matières abrasives, par exemple du carbure de silicium ou du diamant industriel, comme agent d'usinage.
